# EUROPEAN PATENT SPECIFICATION

(11) **EP 0 332 089 B1**
(45) Date of publication and mention of the grant of the patent: **29.05.1996**
(21) Application number: 89103815.0
(22) Date of filing: 04.03.1989
(51) Int. Cl.: H04N 3/233, H04N 5/63

(54) **Protection arrangement of a deflection circuit**
Schutzanordnung für eine Ablenkungsschaltung
Dispositif de protection d'un circuit de déflexion

(30) Priority: 10.03.1988 GB 8805757
(43) Date of publication of application: 13.09.1989
(73) Proprietor: RCA Thomson Licensing Corporation, Princeton New Jersey 08540 (US)
(72) Inventor: Haferl, Peter Eduard, CH-8134 Adliswil (CH)
(74) Representative: Einsel, Robert, Dipl.-Ing.

(56) References cited:
- FR-A- 2 520 958
- US-A- 3 444 424
- US-A- 4 206 388
- US-A- 4 692 852

## Description

This invention relates to a protection apparatus for a deflection circuit.

The invention may be utilized in, for example, a deflection circuit in which the amplitude of a deflection current may be varied or modulated over a relatively wide range for correcting a raster distortion. Modulation of the deflection current amplitude may be desirable for purposes such as, for example, correction of outside and inside east-west pincushion distortion.

Typically, a horizontal deflection circuit includes an output stage comprising a deflection first switch, a horizontal deflection winding and a trace capacitance that supplies deflection current to the deflection winding during each trace interval. A first retrace capacitance is coupled across the deflection winding during the retrace interval to form a retrace resonant circuit. Energy is replenished during retrace via a flyback transformer.

In a horizontal deflection circuit, a modulation switching current is formed by the operation of a bidirectional modulation second switch, during retrace. The modulation second switch, coupled to the retrace resonant circuit that includes the first retrace capacitance, has a conduction time that is phase modulated, during horizontal retrace, in accordance with a vertical rate parabolic voltage. A second retrace capacitor is coupled in parallel with the modulation second switch. The modulation second switch is conductive during the trace interval and is turned-off at a controllable instant during retrace. The modulation second switch forms, when conductive, a low impedance across the second retrace capacitor that clamps the voltage across the second retrace capacitor to zero. As a result, a controllable retrace pulse voltage having an amplitude that is controllable and a width that is variable is developed across the second retrace capacitor when the modulation second switch is nonconductive during a portion of retrace. The retrace voltage across the second retrace capacitor varies the magnitude of a retrace voltage that is developed across the first retrace capacitor and, in this way, provides the desired deflection winding current modulation so as to correct for outside and inside pincushion distortion.

A similar deflection arrangement is known from US-A-4 206 388.

The first and second switches may be formed by first and second transistor switches, respectively, that are coupled in series during a portion of given deflection cycle. It may be desirable to protect the first and second transistor switches against an over-current condition. It may also be desirable to protect the first and second transistor switches against an over voltage condition.

A television deflection apparatus, embodying a feature of the invention, is set out in claim 1.

In the Drawing:
FIGURES 1a-1h illustrate idealized waveforms useful in explaining the circuit of FIGURE 2;
FIGURE 2 illustrates a deflection circuit, embodying an aspect of the invention, that includes outside pincushion correction arrangement; and
FIGURES 3a-3d illustrate waveforms useful in explaining a current protection feature of the circuit of FIGURE 2.

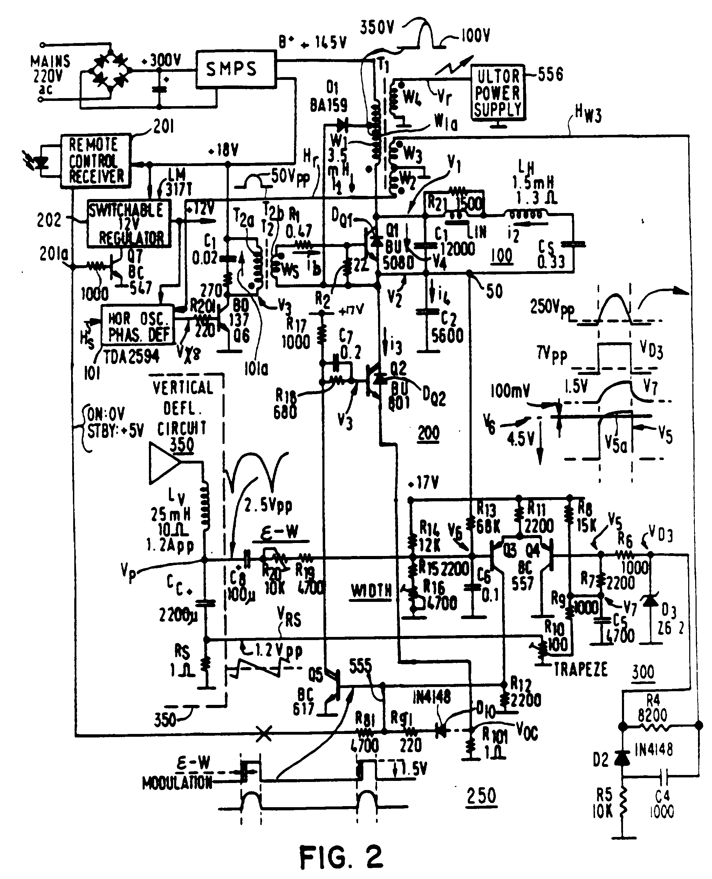

A horizontal deflection circuit 250 of FIGURE 2, embodying an aspect of the invention, provides horizontal deflection in, for example, an FS color cathode ray tube (CRT) type A66EAS00X01. Circuit 250 includes a switching transistor Q1 operating at a horizontal frequency f_{H} and an anti-parallel damper diode D_{Q1}, both being constructed as one integrated circuit. A retrace capacitance C1 is coupled in parallel with transistor Q1 and diode D_{Q1}. A deflection winding L_{H} is coupled in series with an S-shaping trace capacitance C_{S} to form a circuit branch that is coupled in parallel with each of transistor Q1, diode D_{Q1} and retrace capacitance C1 to form a retrace resonant circuit 100 during horizontal retrace.

A phase-control stage 101 that includes a horizontal oscillator and a phase detector, not shown in detail in FIGURES, is responsive to a horizontal synchronizing signal H_{S}. Signal H_{S} is derived from, for example, a video detector of a television receiver, not shown in the FIGURES. Stage 101 applies, via a transistor Q6, a drive voltage 101a to a primary winding T₂ₐ of a driver transformer T2 that is transformer coupled to a secondary winding T_{2b} of transformer T2. Winding T_{2b} is coupled via a voltage divider, that includes resistors R1 and R2, to the base-emitter junction of transistor Q1 for producing a base drive current i_{b} at the horizontal frequency f_{H}. A primary winding W₁ of a flyback transformer T1 is coupled between a source of a B+ voltage and the collector of transistor Q1. A secondary winding W₂ of transformer T1 is coupled to stage 101 to provide a feedback retrace signal Hᵣ for generating drive voltage 101a that synchronizes a horizontal deflection current i₂ in winding L_{H} to signal Hₛ.

A switched raster correction circuit 200, embodying a feature of the invention, includes an E-W control circuit 300 that controls the switching timing of a switching transistor Q2. Transistor Q2 is conductive throughout the trace interval and becomes nonconductive during a controllable instant within the retrace interval. The collector of transistor Q2 is coupled to a junction terminal 50 between the emitter of transistor Q1 and retrace capacitor C1. The emitter of transistor Q2 is coupled to ground via a small current sampling resistor R101. A damper diode D_{Q2} ,coupled in parallel with transistor Q2, is constructed with transistor Q2 as one integrated circuit. A second retrace capacitor C2 is coupled between the collector of transistor Q2 and the ground conductor. A retrace voltage Vᵣ generated across a winding W₄ of transformer T1 provides a high voltage, used for generating an ultor voltage in an ultor power supply 556 that includes rectifying diodes, not shown in the FIGURES.

A first hypothetical example that is used for explanation purpose represents a first extreme operating condition in which transistor Q2 is maintained conductive throughout trace and retrace. In this case, deflection circuit 250 generates deflection current i₂ in a manner that is well known but without East-West correction. As explained later on, current i₂ is at a maximum peak-to-peak amplitude, in this case.

A second hypothetical example that is also used for explanation purposes, represents a second extreme operating condition in which switching transistor Q2 is in cutoff throughout an entire retrace interval. In the second example, during retrace, a pair of resonant circuits are formed. The first one, retrace resonant circuit 100 of FIGURE 2, includes retrace capacitor C1, winding L_{H} and trace capacitor C_{S}. The second resonant circuit includes flyback transformer winding W₁ and retrace capacitor C2 that are coupled in series. Considered separately, each of the pair of retrace resonant circuits is tuned to a frequency that is lower than a required nominal retrace frequency. The resonant circuits are coupled to form a combined resonant circuit. Therefore, the resulting common retrace frequency of the combined resonant circuit is higher than each of its constituents and is made equal to the required nominal retrace frequency that is, illustratively, 43 KHz in the PAL system.

As explained before, secondary winding W₂ of transformer T1 provides horizontal synchronizing retrace signal Hᵣ. Each pulse of signal Hᵣ represents the retrace interval in deflection winding L_{H}. Horizontal synchronizing signal Hᵣ is coupled to phase-control-stage 101 for providing feedback synchronization information. The synchronization information contained in the pulses of signal Hᵣ is indicative of the phase of current i₂ in deflection winding L_{H}. Signal Hᵣ and horizontal sync pulses Hₛ are used to adjust the phase and the frequency of the horizontal oscillator output signal that is included in stage 101.

In the second hypothetical example, primary winding W₁ of transformer T1 is coupled to retrace resonant circuit 100 through a capacitive voltage divider that includes capacitors C1 and C2 to form the combined resonant circuit. The combined retrace resonant circuit enables proper synchronization without causing mouseteeth distortion. The advantages of forming such combined retrace resonant circuit are explained in detail in U.S. Patent US-A-4,634,937 in the name of P.E. Haferl, entitled "EAST-WEST CORRECTION CIRCUIT".

During trace, current i₁ in winding W₁ flows through transistor Q1 and through transistor Q2 to ground. During retrace, current i₁ that flows through capacitor C1 also flows through capacitor C2 as retrace current i₄ and causes a retrace voltage V₂ to be developed across retrace capacitor C2.

The amplitude of a retrace voltage V₁, developed across the series coupled capacitor C1 and C2 is stabilized by the B+ voltage that is regulated. Therefore, voltage V₁ is, advantageously, substantially unaffected by the East-West modulation. Retrace voltage V₄, developed across winding L_{H} and across capacitor C1, determines the amplitude of deflection current i₂. Retrace voltage V₄ is equal to retrace voltage V₁ minus retrace voltage V₂. Because current i₃ in transistor Q2 is zero during the second portion of retrace when transistor Q2 is nonconductive, retrace current i₁ flows substantially entirely as current i₄ through capacitor C2 and generates retrace voltage V₂. It follows that in the second hypothetical example in which transistor Q2 is nonconductive throughout retrace, voltage V₂ is at a maximum amplitude. Consequently, voltage V₄ amplitude is at a minimum and deflection current i₂ is also at a minimum in the second hypothetical example.

Modulation of deflection current is obtained by a modulation of the turn-off instant of transistor Q2 during the first half of the retrace interval in a way that mouseteeth distortions are reduced. By selecting the value of capacitor C1 to be, for example, approximately twice that of capacitor C2, and the value of the inductance of winding W1 to be approximately twice that of winding L_{H}, the retrace frequency remains the same during both the first portion of retrace, when transistor Q2 is conductive, and during the second portion of retrace, when transistor Q2 is nonconductive. Consequently, the phase of voltage V₁ in winding W₁ relative to that of deflection current i₂ is unaffected by the conduction state of transistor Q2. Modulation of the turn-off instant is permissible because both the retrace time and a retrace voltage Vᵣ developed from voltage V₁ in winding W₄ of transformer T1 are, advantageously, substantially unaffected by the state of conductance of transistor Q2, during retrace.

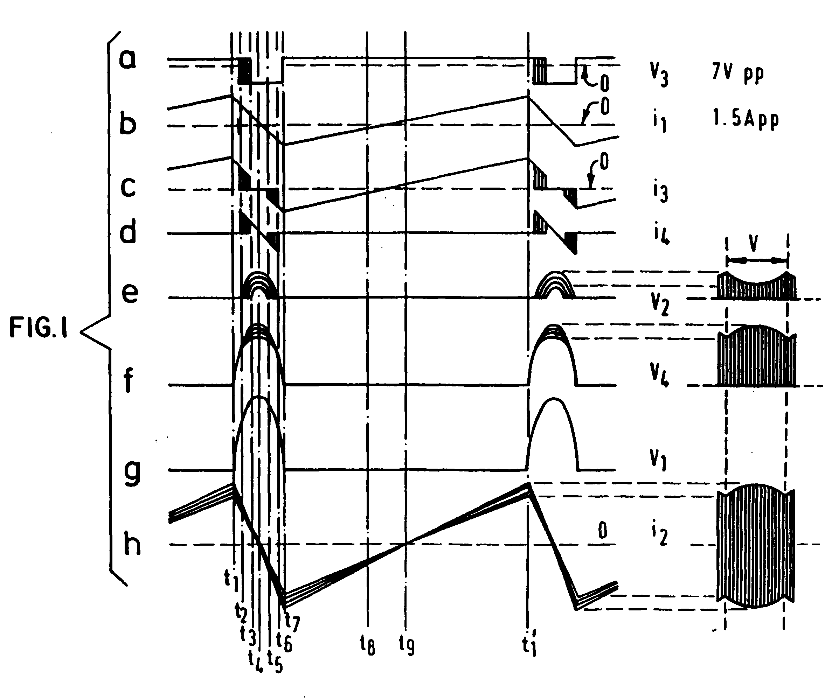

FIGURES 1a-1h illustrate idealized waveforms useful for explaining the operation of the circuit of FIGURE 2. Similar symbols and numerals in FIGURES 2 and in FIGURES 1a-1h indicate similar items or functions.

E-W control circuit 300 of FIGURE 2 generates a pulsed voltage V₃ which drives the base of transistor Q2. Voltage V₃ causes transistor Q2 to be conductive throughout the trace interval. During retrace, the falling edge of voltage V₃ is phase modulated in the range t₂-t₃ of FIGURE 1a. Thus, switching transistor Q2 of FIGURE 2 is conductive prior to time t₂ of FIGURE 1a and switched into cut-off after time t₂ at the phase modulated instant within the range t₂-t₃. When conductive, transistor Q2 clamps retrace voltage V₂ to zero and varies the instant when the generation of voltage v₂ occurs.

Current i₁ in winding W₁ of transformer T1 of FIGURE 2 flows into resonant circuit 100 that includes winding L_{H} and capacitor C1. From resonant circuit 100, current i₁ splits and forms current i₃ and current i₄ when transistor Q2 of FIGURE 2 is nonconductive. When transistor Q2 is turned-off, the decreasing current i₄ of FIGURE 1d charges capacitor C2 of FIGURE 2 until time t₄ of FIGURE 1d, occuring at the center of the retrace interval when currents i₁ and i₄ become zero. As a result, voltage V₂ of FIGURE 1e reaches its peak amplitude at the center of retrace. During the second half of retrace, negative current i₄ of FIGURE 1d, that becomes increasingly more negative, discharges capacitor C2 of FIGURE 2 until voltage V₂ becomes negative. When voltage V₂ becomes sufficiently negative, diode D_{Q2} starts conducting and clamps voltage V₂ to -0.6 voltage, the forward voltage of diode D_{Q2}.

The correction of outside pincushion distortion requires a higher amplitude of deflection current i₂ when scanning lines at the center of the raster than at the top or bottom. At the top of the raster, transistor Q2 is turned off at time t₂ of FIGURE 1a, that is the earliest. Voltage V₂ of FIGURE le starts to increase after time t₂. After the center of retrace occurs, voltage V₂ decreases until it becomes zero at time t₆. Because transistor Q2 is turned off at the time t₂ at the top of the raster, the peak amplitude of voltage V₂ is at a maximum; consequently, the peak amplitude of voltage V₄ of FIGURE 1_{f} is at a minimum. From the top toward the center of the raster, the turn-off time of transistor Q2, determined by the falling edge of voltage V₃ of FIGURE 1a, is increasingly delayed within interval t₂ - t₃. The result is a decreasing peak amplitude of voltage V₂ of FIGURE 2, an increasing peak amplitude of voltage V₄ and an increasing peak amplitude of deflection current i₂. At the center of the raster, voltage V₂ starts increasing at time t₃ of FIGURE le and becomes zero at time t₅ of each horizontal period. From the center toward the bottom of the raster, the turn-off time of transistor Q2 of FIGURE 2 is increasingly advanced from time t₃ to time t₂ of FIGURE 1a, resulting in an increasing voltage V₂ of FIGURE 2, a decreasing voltage V₄ and a decreasing deflection current i₂. Thus, deflection current i₂ is proportional to retrace voltage V₄ and inversely proportional to retrace voltage ^{V}₂ that is modulated in accordance with the turn-off instant of transistor Q2.

The falling edge of voltage V₃ of FIGURE 1a is phase modulated in a parabolic manner at a vertical rate to obtain the vertical rate envelopes shown in conjunction with waveforms le, lf and lh. Advantageously, the variation of the turn-off time of transistor Q2 of FIGURE 2 modulates also the time when voltage V₂ of FIGURE 1e becomes zero near the end of retrace.

The center of the retrace pulse waveform of voltage V₂ during horizontal retrace is maintained the same relative to the center of horizontal retrace time t₄ throughout vertical scan. Thus, voltages V₄ and V₂ of FIGURE 2 are maintained in phase with respect to voltage V₁. It follows that, advantageously, signal Hᵣ is maintained in phase with deflection current i₂.

Signal Hᵣ developed across winding W₂ provides phase information of the phase of deflection current i₂. Signal Hᵣ is applied to stage 101 for synchronizing the horizontal oscillator of stage 101 to sync pulses Hₛ of the video signal. Because capacitor C2 couples winding W₁ to winding L_{H} to form a combined resonant circuit, the phase information of signal Hᵣ is substantially identical to that of deflection current i₂. Further advantage is provided by the switched operation of transistor Q2 is that inductive components are not required to be coupled in series with transistor Q2. Also, the switched operation of transistor Q2 results in low power dissipation in transistor Q2. Therefore, transistor Q2 may not require a heat sink. An additional advantage over other east-west circuits such as a conventional diode modulator is that deflection current i₂ does not flow through a damper diode during the second half of trace, resulting in lower deflection losses and lower asymmetric linearity error.

As explained before, during retrace, deflection resonant circuit 100 is coupled to flyback transformer T1 by capacitor C2 having a high impedance, after transistor Q2 becomes nonconductive. When transistor Q2 becomes nonconductive, the ultor voltage rectifying diodes, not shown, are conducting. The high impedance of capacitor C2 substantially isolates windings L_{H} and W₁ at frequencies associated with mouseteeth distortion that are substantially lower than the retrace frequency of resonant circuit 100 during retrace; thereby, raster distortions known as mouseteeth are prevented from occurring. The manner by which mouseteeth are prevented is further explained in U.K. Patent Application 8805758 (EP-A-0 332 091), filed 10 March 1988, in the name of the same Applicant, entitled, RASTER DISTORTION DESCRIPTION DEFLECTION CIRCUIT.

Junction terminal 50, between capacitors C1 and C2, is clamped to ground potential by transistor Q2 during the entire trace interval. Therefore, raster disturbances referred to as "Organ Pipes" do not appear. Organ Pipes type raster disturbances may occur if such clamping were not used, as a result of oscillatory current or ringings in the flyback transformer primary current. Such ringings are suppressed because transistor Q1 is clamped to ground by transistor Q2 during the entire trace interval.

Advantageously, damper diodes D_{Q1} and D_{Q2} may be constructed with the corresponding transistor using the integrated circuit technology for further reducing the required discrete components count.

E-W control circuit 300 of FIGURE 2 includes a differential amplifier formed by transistors Q3 and Q4 and Darlington driver transistor Q5 which drives switching transistor Q2. The differential amplifier that includes transistors Q3 and Q4 compares a vertical parabola voltage V₆ to an exponentially shaped ramp portion V₅ₐ of a voltage V₅ having a waveform that is shown in FIGURE 2. The crossover points of the compared voltages determines the timing of control voltage V₃ of FIGURE 1a.

To develop voltage V₅ of FIGURE 2, horizontal retrace pulses H_{w3} of FIGURE 2, developed in a winding W₃ of transformer T1, are coupled via a resistor R4 to a zener diode D3. A speed-up network that includes a capacitor C4, a resistor R5 and a diode D2 generates a gating pulse V_{D3} across diode D3 having a leading edge with a fast rise time. Faster leading edge results, advantageously, in a larger dynamic range of E-W control circuit 300. Pulse V_{D3} across diode D3 is applied via resistors R6 and R7 to a capacitor C5 and to a resistor R9 for generating the exponentially shaped ramp portion V₅ₐ of voltage V5. Pulsed voltage V5, that includes exponentially increasing top portion V₅ₐ, is applied to the base of transistor Q4. A vertical rate parabolic voltage V_{P} of FIGURE 2 that includes a superimposed sawtooth voltage is coupled from a DC blocking capacitor C_{c} of a conventional vertical deflection circuit 350 to the base of transistor Q3 via a capacitor C8, a resistor R20 and a resistor R19. Resistors R14, R15 and R16 provide dc bias to the base of transistor Q3. Voltage V₂, that is coupled via a resistor R13 to the base of transistor Q3 and to an integrating capacitor C6, provides a negative feedback, causing the vertical rate envelope of voltage V₂ to track parabolic voltage Vₚ that is developed in capacitor C_{c}.

A vertical sawtooth voltage V_{RS} developed across a sampling resistor Rₛ is coupled, via a resistor R10 and a resistor R9, to a capacitor C5 for developing a voltage V₇ having an exponential upramping portion at a peak amplitude that is determined by voltage V_{RS}. Voltage V₇ is coupled to the base of transistor Q4 of control circuit 300. In this way, Voltage V_{RS} is also coupled via capacitor C_{c} to the base of transistor Q3. Because voltage V_{RS} is applied in a differential manner, voltage V_{RS} is prevented from substantially affecting the switching operation of transistors Q3 and Q4. A vertical parabola voltage V₆ developed at the base of transistor Q3 is compared to horizontal ramp voltage V₅. The crossover points of voltages V₅ and v₆ determine the timing of the leading and trailing edges of voltage V₃, as indicated before.

Exponentially shaped ramp portion V₅ₐ of voltage v₅ linearizes the east-west modulator circuit 200 by compensating for the decreasing level of current i₁ of FIGURE 1b, during retrace. Linearization occurs because a small amount of modulation of voltage V₃ near time t₂ of FIGURE la results in a higher amplitude modulation of voltage V₂ of FIGURE 1e than the same amount of modulation of voltage V₃ near time t₃ of FIGURE 1a. This is so because the amplitude of each of currents i₁ and i₄ of FIGURES 1b and 1d, respectively, is higher at time t₂ than at time t₃ and because voltage V₂ is proportional to the value of ∫i₄. dt. The exponentially shaped ramp voltage V₅ is steeper near time t₂ than at time t₃ of FIGURE 1g. Consequently, for a given voltage variation at the base of transistor Q3, the the modulation of voltage V₃ is smaller around time t2 than around time t₃. Thus the exponentially shaped ramp portion V₅ₐ of voltage V₅ linearizes the operation of E-W raster correction circuit 200. Resistor R15 raises the dc average of voltage V₅. Compensation of picture width variations as a function of beam current, that may be referred to as anti-breathing, may be applied via the base of transistor Q3.

Transistor Q5 of FIGURE 2, having a base that is coupled to the junction of a load resistor R12 and a collector of transistor Q3, applies a base drive to transistor Q2 from a load resistor R17 that is coupled to the collector of transistor Q5. The collector of transistor Q5 is coupled via a parallel arrangement of a capacitor C7 and a resistor Rf for generating a fast transition of a falling edge portion of voltage V₃ to obtain a fast turn-off of transistor Q2. The fast turn-off allows interrupting current i₃ immediately after time t₁ of FIGURE 1c and allows using the full modulation range between time t₁ and t₄. Illustratively, the turn-off delay of transistor Q2 of FIGURE 2 is less than 1 microsecond. The use of a MOSFET in place of Q2 may further reduce the turn-off delay. The fast turn-off feature may be desirable in a situation that requires a deflection current at, for example, a higher frequency such as 2xf_{H}.

A protection diode D1, embodying a feature of the invention, is coupled between the collector of transistor Q2 and a terminal W1a of primary winding W₁ of transformer T1. Diode D1 protects transistor Q2 from excessive peak voltage that may occur when power is initially turned on. Transistor Q2 is protected by diode D1 which limits voltage V₂ to a maximum of 350V. Transformer T2 has, preferably, 400V isolation capability between the primary and secondary windings.

A remote control receiver 201 generates an on/off control signal 201a that is coupled to an on/off transistor switch Q7 of a +12V regulator. When transistor Q7 is nonconductive, an output supply voltage +12V is generated that causes phase-control-stage 101 to be energized during power-up. When transistor Q7 is conductive, stage 101 is de-energized that causes stand-by mode operation. During a transition to the stand-by mode, phase-control-stage 101, that supplies base drive to the base of transistor Q6, causes driver transistor Q6 of transformer T2 to be turned-off.

After, for example, the transition from normal operation to the stand-by mode operation, there may still be energy stored in primary winding T₂ₐ of transformer T2 of FIGURE 2. This energy may continue producing base current i_{b} in deflection transistor Q1 until a magnitude of voltage 101a across primary winding T₂ₐ of transformer T2 decreases to zero. As a result, a final deflection cycle may be generated with an extended but undefined time duration that ends when transistor Q1 ceases to conduct. Consequently, currents i₁, i₂ and i₃ might increase excessively and destroy transistors Q1 and Q2.

In accordance with another feature of the invention, to prevent such a possibility, on/off control signal 201a is coupled through a resistor R81 and a conductor 555 to the base electrode of a transistor Q5 that provides base drive to transistor Q2, causing transistor Q2 to turn off immediately after the power-on-to-standby transition. Since both transistors Q1 and Q2 are coupled in series, turning off transistor Q2 causes the current in both transistors to cease. Thus transistors Q1 and Q2 are protected. However, such fast shut-down arrangement may require a fast spot suppression circuit to prevent a beam spot related damage to the CRT, not shown.

In an alternative protection arrangement, embodying a further feature of the invention, in which the aforementioned fast spot suppression circuit, advantageously, may not be required is also shown in FIGURE 2. In such preferred arrangement, a feedback arrangement that includes a series arrangement of a diode D10 and a resistor R91 is coupled between the emitter of transistor Q2, as shown by the dashed line, and the base of transistor Q5, via conductor 555. When such feedback arrangement is used, the emitter of transistor Q2 is coupled to ground via current sampling resistor R101 causing current i₃ to be sampled across resistor R101. A resulting voltage V_{oc} developed across resistor R101 controls the base voltage of transistor Q5. When voltage V_{oc} across resistor R101 exceeds +1.8V, transistor Q5 is turned on by voltage V_{oc} and reduces the base drive of transistor Q2. Thus, current i₃ is limited to a peak of 1.8 ampere when, for example, resistor R101 equals 1 ohm.

The feedback provided by diode D10 and resistor R91, advantageously, protects both transistors Q1 and Q2 that are coupled in series during operation and, in particular, during the power-up-to-standby transition. It should be understood that such feedback arrangement may also be used together with, or instead of the arrangement in which signal 201a is coupled to the base of transistor Q5 that was explained before. When, for example, both arrangements are used together, current i₃ may become substantially reduced to, for example, zero for providing the required protection over-current or for providing on/off operation.

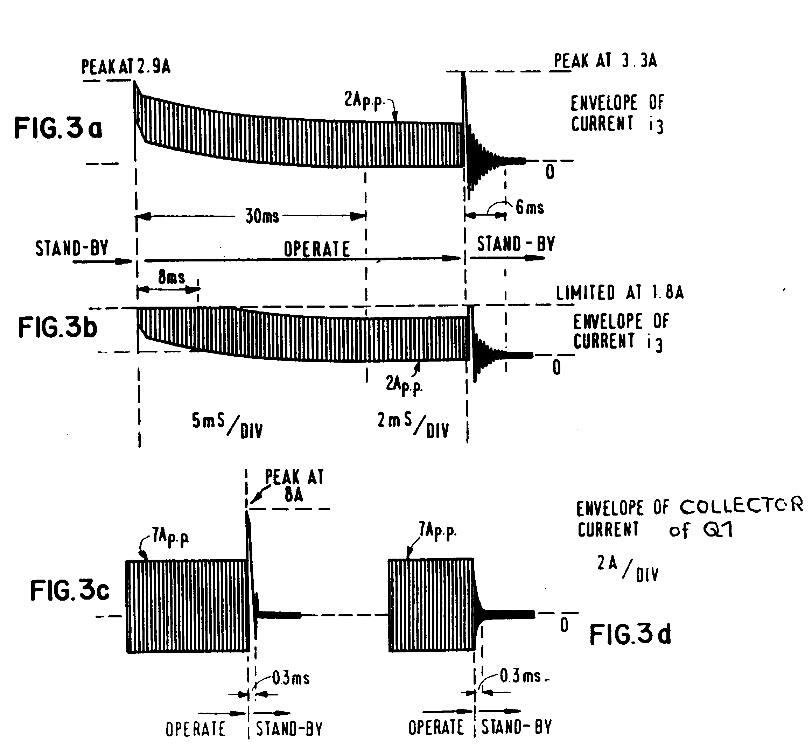

FIGURE 3a illustrates an envelope of a waveform of current i₃ of FIGURE 2 immediately after corresponding transitions between normal operation power-up mode and standby mode without the protection circuit, that would occur if conductor 555 were disconnected for disabling the operation of the protection circuit. Similarly, FIGURE 3b illustrates the envelope of the waveform of current i₃ of FIGURE 2 when conductor 555 is connected that enables the operation of the protection circuit. Note that current i₃ of FIGURE 3b is limited to the maximum of 1.8 amperes. Likewise, FIGURE 3c illustrates an envelope of [the collector current of Q]1 when the protection circuit is disabled and FIGURE 5d illustrates the envelope of [collector current of Q1] when the protection circuit is enabled.

## Claims

1. A television deflection apparatus, comprising:
a deflection resonant circuit including a deflection winding and a retrace capacitance;
a source of an input first signal at a frequency that is related to a first deflection frequency;
a first transistor operating as a switch and being responsive to said input first signal and being coupled to said deflection resonant circuit for generating a deflection current in said deflection winding at said first deflection frequency;
a second transistor coupled to said deflection resonant circuit and to said first transistor such that during a given deflection cycle said first and said second transistors are conductive to form a series path for current passing through their main current conducting paths;
a source of an input supply voltage coupled to said first and second transistors for generating a current that flows through both transistors when both transistors are conductive;
a source of a modulation second signal coupled to said second transistor for modulating conduction thereof in accordance with said second signal; **characterized by**
means (201, 555) responsive to an overvoltage condition for generating a control signal that is coupled to a control terminal (base) of said second transistor (Q2) for substantially reducing the flow of said current through both transistors (Q1 and Q2) when said control signal is generated.

2. An apparatus according to claim 1 **characterized in that** said control signal generating means (D10, 555) is responsive to said current (i3) that flows in said second transistor (Q2) for generating said control signal when a magnitude of said current that flows in said second transistor becomes larger than a predetermined magnitude.

3. An apparatus according to claim 1 **characterized in that** said control signal generating means comprises a resistance (R101) that is coupled in series with said first (Q1) and second (Q2) transistors.

## Patentansprüche

1. Fernseh-Ablenkschaltung, umfassend:
eine Ablenk-Resonanzschaltung mit einer Ablenkwicklung und einer Rücklauf-Kapazität;
eine Quelle für ein erstes Eingangssignal mit einer Frequenz, die auf eine erste Ablenkfrequenz bezogen ist;
einen ersten Transistor, der als Schalter arbeitet und auf das erste Eingangssignal anspricht, und der mit der Ablenk-Resonanzschaltung verbunden ist, um einen Ablenkstrom in der Ablenkwicklung mit der ersten Ablenkfrequenz zu erzeugen;
einen zweiten Transistor, der mit der Ablenk-Resonanzschaltung und dem ersten Transistor verbunden ist, so daß während eines gegebenen Ablenkzyklus der erste und der zweite Transistor leitend sind, um einen Reihenweg für Strom zu bilden, der durch ihre haupt-stromführenden Wege verläuft;
eine Quelle für eine Eingangs-Versorgungsspannung, die mit dem ersten und zweiten Transistor verbunden ist, um einen Strom zu erzeugen, der durch beide Transistoren fließt, wenn beide Transistoren leitend sind;
eine Quelle für ein zweites Modulationssignal, die mit dem zweiten Transistor verbunden ist, um das Leiten von diesem in Übereinstimmung mit dem zweiten Signal zu modulieren;
gekennzeichnet durch:
Mittel (201, 555), die auf einen Überspannungs-Zustand ansprechen, um ein Steuersignal zu erzeugen, das einem Steueranschluß (Basis) des zweiten Transistors (Q2) zugeführt wird, um den Stromfluß durch die beiden Transistoren (Q1) und (Q2) weitgehend zu vermindern, wenn das Steuersignal erzeugt wird.

2. Schaltung nach Anspruch 1, dadurch gekennzeichnet, daß die das Steuersignal erzeugenden Mittel (D10, 555) auf den Strom (i3) ansprechen, der in dem zweiten Transistor (Q2) fließt, um das Steuersignal zu erzeugen, wenn die Größe des in dem zweiten Transistor fließenden Stroms größer als ein vorgegebener Wert wird.

3. Schaltung nach Anspruch 1, dadurch gekennzeichnet, daß die das Steuersignal erzeugenden Mittel einen Widerstand (R101) umfassen, der in Reihe mit dem ersten (Q1) und dem zweiten (Q2) Transistor geschaltet ist.

## Revendications

1. Appareil de déflexion télévision, comportant:
un circuit résonant de déflexion intégrant un enroulement de déflexion et une capacitance de retour ;
une source d'un premier signal d'entrée à une fréquence associée à une première fréquence de déflexion ;
un premier transistor servant d'interrupteur et réagissant audit premier signal d'entrée et couplé audit circuit résonant de déflexion permettant de générer un courant de déflexion dans ledit enroulement de déflexion à ladite première fréquence de déflexion ;
un deuxième transistor couplé audit circuit résonnant de déflexion et audit premier transistor afin que, pendant un cycle de déflexion donné, ledit premier et ledit deuxième transistors soient conducteurs afin de créer une voie en série pour le courant dans les voies de conduite de courant principales ;
une source d'entrée d'alimentation couplée audit premier et deuxième transistor permettant de générer un courant circulant entre les deux transistors lorsque les deux transistors sont conducteurs ;
une source d'un deuxième signal de modulation couplée audit deuxième transistor permettant de moduler sa conduction en accord avec ledit deuxième signal ;
appareil **caractérisée par**
un moyen (201, 555), en réponse à une condition de surtension, générant un signal de commande couplé à une borne de commande (base) dudit deuxième transistor (Q2) afin d'obtenir une réduction importante du débit dudit courant à travers les deux transistors (Q1 et Q2) lors de la génération dudit signal de contrôle.

2. Appareil conforme à la revendication 1 caractérisé en ce que ledit moyen permettant de générer le signal de commande (D10, 555) réagit audit courant (i3) qui circule dans ledit deuxième transistor (Q2) de manière à générer ledit signal de commande lorsque l'amplitude dudit courant qui circule dans ledit deuxième transistor dépasse l'amplitude prédéterminée.

3. Appareil conforme à la revendication 1 caractérisé en ce que le moyen permettant de générer le signal de contrôle intègre une résistance (R101) qui est couplée en série auxdits premier (Q1) et deuxième (Q2) transistors.
